# EUROPÄISCHE PATENTSCHRIFT

(11) **EP 1 892 431 B1**
(45) Veröffentlichungstag und Bekanntmachung des Hinweises auf die Patenterteilung: **13.03.2013**
(21) Anmeldenummer: 07014744.2
(22) Anmeldetag: 27.07.2007
(51) Int. Cl.: F16D 13/64, F16D 13/75

(54) **Kupplungsscheibeneinrichtung**
Coupling disc device
Dispositif de disques d'accouplement

(30) Priorität: 26.08.2006 DE 102006040125
(43) Veröffentlichungstag der Anmeldung: 27.02.2008
(73) Patentinhaber: Schaeffler Technologies AG & Co. KG, 91074 Herzogenaurach (DE)
(72) Erfinder: Mán, Lászlo, Dr., 77833 Ottersweier-Unzhurst (DE)

(56) Entgegenhaltungen:
- DE-A1- 3 139 658
- DE-A1- 10 011 418
- JP-A- 60 192 125
- US-A1- 2004 055 847

## Beschreibung

Die Erfindung betrifft eine Kupplungsscheibeneinrichtung mit in axialer Richtung voneinander beabstandeten Reibbelagteilen, insbesondere Reibbelaghälften, die zwischen zwei Kupplungselementen einklemmbar sind, und mit einer Nachstelleinrichtung, die zwischen den Reibbelagteilen wirksam ist und eine Verstellrampeneinrichtung umfasst, die mit einer Gegenrampeneinrichtung zusammenwirkt.

Aus der deutschen Offenlegungsschrift DE 100 11 418 A1 ist ein Kupplungsaggregat mit einer Kupplungsscheibeneinrichtung, einer Nachstelleinrichtung und einer Sensoreinrichtung bekannt.

Aufgabe der Erfindung ist es, eine Kupplungsscheibeneinrichtung gemäß dem Oberbegriff des Anspruchs 1, insbesondere im Hinblick auf die Verschleißnachstellung, zu verbessern.

Die Aufgabe ist bei einer Kupplungsscheibeneinrichtung mit in axialer Richtung voneinander beabstandeten Reibbelagteilen, insbesondere Reibbelaghälften, die zwischen zwei Kupplungselementen einklemmbar sind, und mit einer Nachstelleinrichtung, die zwischen den Reibbelagteilen wirksam ist und eine Verstellrampeneinrichtung umfasst, die mit einer Gegenrampeneinrichtung zusammenwirkt, dadurch gelöst, dass die Verstellrampeneinrichtung planetengetriebeartig mit der Gegenrampeneinrichtung gekoppelt ist. Die Nachstelleinrichtung ist zwischen den Reibbelagteilen wirksam, um einen betriebsbedingten Verschleiß der Reibbelagteile auszugleichen. Durch die planetengetriebeartige Kopplung der Rampeneinrichtungen kann ein unerwünschtes Nachstellen bei hohen Winkelbeschleunigungen vermieden werden, ohne dass die Gesamtmassenträgheit der Kupplungsscheibeneinrichtung erhöht wird. In bestimmten Fahrsituationen, zum Beispiel bei einer Vollbremsung auf Eis ohne Antiblockiersystem, wobei die Räder zunächst blockieren und dann bei losgelassener Bremse und geöffneter Kupplung im ersten Gang Kontakt mit der Straße bekommen, können extrem große Winkelbeschleunigungen auftreten. Gemäß einem wesentlichen Aspekt der Erfindung wird die Verstellrampeneinrichtung in der Art eines Planetengetriebes mit der Gegenrampeneinrichtung gekoppelt.

Ein bevorzugtes Ausführungsbeispiel der Kupplungsscheibeneinrichtung ist dadurch gekennzeichnet, dass die Verstellrampeneinrichtung einen radial äußeren Verstellrampenring und einen radial inneren Verstellrampenring umfasst. Der radial innere Verstellrampenring stellt eine Art Sonnenrad des Planetengetriebes dar. Der radial äußere Verstellrampenring stellt eine Art Hohlrad des Planetengetriebes dar.

Ein weiteres bevorzugtes Ausführungsbeispiel der Kupplungsscheibeneinrichtung ist dadurch gekennzeichnet, dass die beiden Verstellrampenringe etwa die gleiche Massenträgheit aufweisen. Vorzugsweise ist bei der Aufteilung der Massenträgheit die Übersetzung des Planetengetriebes berücksichtigt.

Ein weiteres bevorzugtes Ausführungsbeispiel der Kupplungsscheibeneinrichtung ist dadurch gekennzeichnet, dass die beiden Verstellrampenringe Verstellrampen mit gegenläufigen Steigungen aufweisen. Dadurch wird ein gleichmäßiges Nachstellen gewährleistet, wenn sich die Verstellrampenringe in entgegengesetzten Richtungen zueinander verdrehen, um Verschleiß auszugleichen.

Ein weiteres bevorzugtes Ausführungsbeispiel der Kupplungsscheibeneinrichtung ist dadurch gekennzeichnet, dass sich die beiden Verstellrampenringe mit mindestens drei Zahnrädern in Eingriff befinden. Die drei Zahnräder stellen Planetenräder des Planetengetriebes dar.

Ein weiteres bevorzugtes Ausführungsbeispiel der Kupplungsscheibeneinrichtung ist dadurch gekennzeichnet, dass der radial äußere Verstellrampenring radial innen Verzahnungsabschnitte aufweist, in die jeweils eines der Zahnräder eingreift. Analog weist der radial innere Verstellrampenring radial außen Verzahnungsabschnitte auf, in die jeweils eines der Zahnräder eingreift. Die Verzahnungsabschnitte können sich auch über den gesamten Umfang des zugehörigen Rampenrings erstrecken.

Ein weiteres bevorzugtes Ausführungsbeispiel der Kupplungsscheibeneinrichtung ist dadurch gekennzeichnet, dass die Zahnräder drehbar an der Gegenrampeneinrichtung angebracht sind. Die Zahnräder sind zum Beispiel durch Stufenniete drehbar an der Gegenrampeneinrichtung gelagert.

Ein weiteres bevorzugtes Ausführungsbeispiel der Kupplungsscheibeneinrichtung ist dadurch gekennzeichnet, dass die beiden Verstellrampenringe durch eine in Umfangsrichtung wirksame Zugfedereinrichtung miteinander gekoppelt sind. Die Zugfedereinrichtung umfasst mindestens ein Zugfederelement, vorzugsweise mehrere Zugfederelemente. Die Zugfedereinrichtung bewirkt beim Auftreten Verschleiß, ein Verdrehen der Verstellrampenringe gegeneinander und gegen die Gegenrampeneinrichtung.

Die oben angegebene Aufgabe ist bei einer Kupplungsscheibeneinrichtung mit in axialer Richtung voneinander beabstandeten Reibbelagteilen, insbesondere Reibbelaghälften, die zwischen zwei Kupplungselementen einklemmbar sind, und mit einer Nachstelleinrichtung, die zwischen den Reibbelagteilen wirksam ist und eine Verstellrampeneinrichtung umfasst, die mit einer Gegenrampeneinrichtung zusammenwirkt, und mit einer Sensoreinrichtung, die mit der Nachstelleinrichtung zusammenwirkt, insbesondere einer vorab beschriebenen Kupplungseinrichtung, auch dadurch gelöst, dass die Sensoreinrichtung mehrere Paare, insbesondere mindestens drei Paare Sensorreibelemente umfasst, die über den Umfang der Reibbelagteile verteilt sind und die Reibbelagteile in axialer Richtung zusammenhalten. Die vorzugsweise gleichmäßig über den Umfang der Reibbelagteile verteilten Sensorreibelemente verhindern eine unerwünschte Gestaltänderung der Reibbelagteile, die auch als Topfung bezeichnet wird, und vorzugsweise durch eine betriebsbedingte Feuchtigkeitsaufnahme der Reibbelagteile bewirkt wird.

Ein weiteres bevorzugtes Ausführungsbeispiel der Kupplungsscheibeneinrichtung ist dadurch gekennzeichnet, dass die Sensorreibelemente in axialer Richtung teilweise zwischen zwei Seitenteilen einer Drehschwingungsdämpfungseinrichtung angeordnet sind. Dadurch wird ein stabiler Zusammenhalt der Sensorreibelemente in axialer Richtung gewährleistet.

Ein weiteres bevorzugtes Ausführungsbeispiel der Kupplungsscheibeneinrichtung ist dadurch gekennzeichnet, dass die Sensorreibelemente Sensorreibflächen umfassen, an denen die Kupplungselemente zur Anlage kommen, wenn die Kupplungselemente an Reibflächen der Reibbelagteile zur Anlage kommen. An den Sensorreibflächen tritt durch die daran in Anlage kommenden Kupplungselemente im Betrieb der Kupplungsscheibeneinrichtung ebenso Verschleiß auf wie an den Reibflächen der Reibbelagteile.

Ein weiteres bevorzugtes Ausführungsbeispiel der Kupplungsscheibeneinrichtung ist dadurch gekennzeichnet, dass die Sensorreibelemente rund oder teilweise gerundet ausgebildet und in jeweils einer Ausnehmung gehalten sind, die in dem zugehörigen Reibbelagteil ausgespart ist. Die Ausnehmung ist vorzugsweise etwas größer als das zugehörige Sensorreibelement. Die Ausnehmung hat vorzugsweise die Gestalt eines Langlochs.

Ein weiteres bevorzugtes Ausführungsbeispiel der Kupplungsscheibeneinrichtung ist dadurch gekennzeichnet, dass die Sensorreibelemente in den zugehörigen Ausnehmungen drehbar so angeordnet und geführt sind, dass sie sich in den zugehörigen Ausnehmungen verdrehen, wenn die Kupplungselemente an den Sensorreibflächen der Sensorreibelemente zur Anlage kommen. Vorzugsweise verdrehen sich die Sensorreibelemente im Zug- und Schubbetrieb einer mit der Kupplungsscheibeneinrichtung ausgestatteten Kupplungseinrichtung in entgegengesetzten Richtungen.

Die Erfindung betrifft des Weiteren ein Kupplungsaggregat zur Drehmomentübertragung zwischen einem Motor und einem Getriebe, mit mindestens einer Kupplungseinrichtung, insbesondere einer Reibungskupplung, die eine Druckplatte umfasst, die drehfest, jedoch axial in Richtung einer zwischen der Druckplatte und einer Gegendruckplatte einklemmbaren Kupplungsscheibeneinrichtung, wie sie vorab beschrieben ist, begrenzt verlagerbar ist.

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist. Es zeigen:

Figur 1 eine Kupplungsscheibeneinrichtung in einem Halbschnitt;

Figur 2 die Kupplungsscheibe aus Figur 1 in einem weiteren Halbschnitt;

Figur 3 eine ausschnittsweise Darstellung von zwei Verstellrampenringen, die planetengetriebeartig mit einem Gegenrampenring gekoppelt sind, der Kupplungsscheibeneinrichtung aus den Figuren 1 und 2 in der Draufsicht und

Figur 4 eine Seitenansicht der Kupplungsscheibeneinrichtung aus den Figuren 1 bis 3.

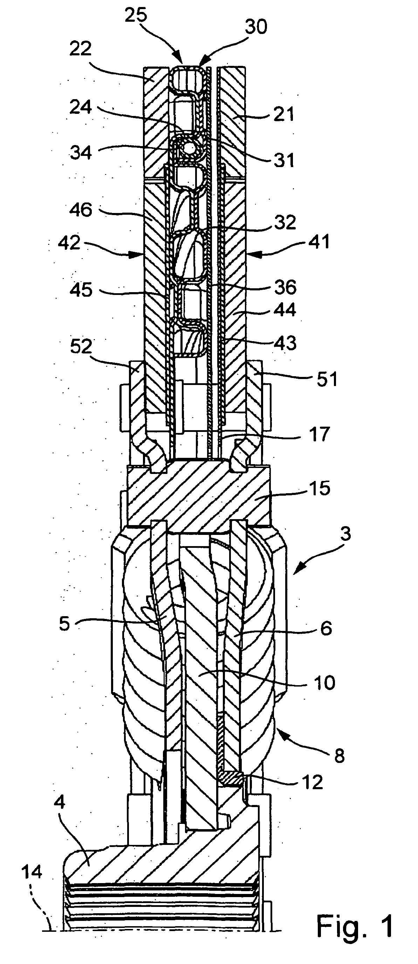

In den Figuren 1 bis 4 ist eine Erfindungsgemäße Kupplungsscheibeneinrichtung 1, die im Folgenden auch als Kupplungsscheibe bezeichnet wird, in verschiedenen Ausschnitten und Ansichten dargestellt. Die Kupplungsscheibe 1 ist zwischen einer Druckplatte und einer Gegendruckplatte oder einer Anpressplatte und einem Schwungrad einer Reibungskupplung einklemmbar. Die Reibungskupplung ist im Antriebsstrang eines Kraftfahrzeugs angeordnet. Der Antriebsstrang umfasst eine Antriebseinheit, insbesondere eine Brennkraftmaschine, von der eine Kurbelwelle ausgeht, die über die Reibungskupplung mit einer Getriebeeingangswelle koppelbar ist. Die Kupplungsscheibe 1 ist drehfest mit der Getriebeeingangswelle verbindbar. Der Aufbau und die Funktion einer Reibungskupplung im Antriebsstrang eines Kraftfahrzeugs werden als bekannt vorausgesetzt und hier nicht weiter erläutert.

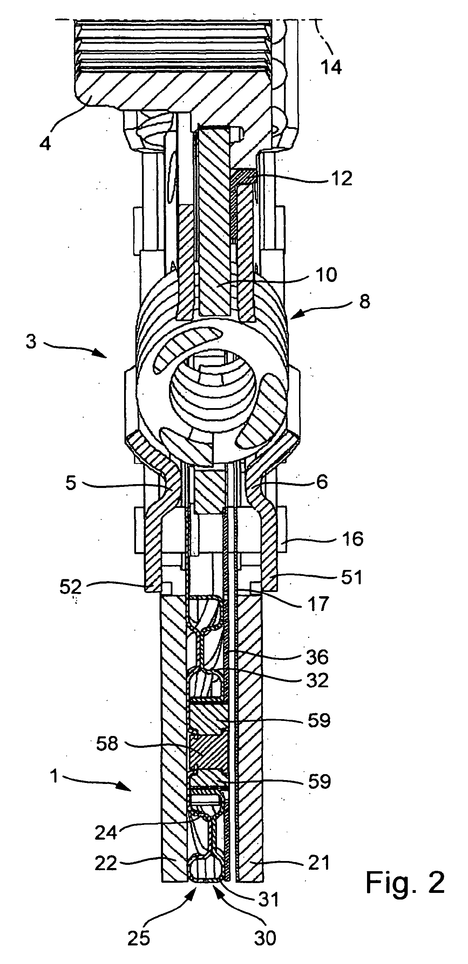

Die in den Figuren 1 und 2 in zwei Halbschnitten dargestellte Kupplungsscheibe 1 umfasst eine Drehschwingungsdämpfungseinrichtung 3 und eine Nabe 4. Die Nabe 4 ist über eine Innenverzahnung mit einer komplementär ausgebildeten Außenverzahnung einer (nicht dargestellten) Getriebeeingangswelle eines Getriebes drehfest verbindbar. Radial außerhalb der Nabe 4 sind zwei Seitenteile 5, 6 relativ zu der Nabe 4 begrenzt verdrehbar. Die Seitenteile 5, 6 stellen Eingangsteile der Drehschwingungsdämpfungseinrichtung 3 dar und sind über eine Federeinrichtung 8 drehschwingungsdämpfend mit einem Zwischenteil 10 gekoppelt. Das Zwischenteil 10 stellt das Ausgangsteil der Drehschwingungsdämpfungseinrichtung 3 dar und ist, vorzugsweise über eine Verzahnung, radial innen drehfest mit der Nabe 4 verbunden. In radialer Richtung zwischen der Nabe 4 und dem Seitenteil 6 und in axialer Richtung zwischen dem Zwischenteil 10 und dem Seitenteil 6 ist ein Reibring 12 angeordnet, der einen L-förmigen Querschnitt aufweist.

Die Begriffe radial, axial und in Umfangsrichtung beziehen sich im Rahmen der vorliegenden Erfindung auf die Drehachse der Kupplungsscheibe 1, die in den Figuren 1 und 2 durch eine gestrichelte Linie 14 angedeutet ist. Die beiden Seitenteile 5, 6 sind durch Stufenbolzen 15, 16 in einem definierten axialen Abstand zueinander angeordnet. Die Stufenbolzen 15, 16 sind an ihren Enden mit den Seitenteilen 5, 6 vernietet. Weitere (in den Figuren 1 und 2 nicht sichtbare) Stufenbolzen sind in Umfangsrichtung beabstandet von den Stufenbolzen 15, 16 angeordnet. Die Stufenbolzen 15, 16 erstrecken sich in axialer Richtung durch entsprechende Durchgangslöcher in einem Belagträgerblech 17 hindurch. Das Belagträgerblech 17 ist radial innen durch die Stufenbolzen 15, 16 in axialer Richtung geführt. Radial außen ist an dem Belagträgerblech 17 eine erste Kupplungsbelaghälfte 21 befestigt, zum Beispiel auf das Belagträgerblech 17 aufgeklebt. Die Kupplungsbelaghälfte 21 kann, ebenso wie eine zweite Kupplungsbelaghälfte 22, einteilig oder mehrteilig ausgeführt sein. Die zweite Kupplungsbelaghälfte 22 ist an einem Gegenrampenring 24 befestigt, der auch als Gegenrampeneinrichtung bezeichnet wird. Vorzugsweise ist die zweite Kupplungsbelaghälfte 22 auf den Gegenrampenring 24 aufgeklebt.

Der Gegenrampenring 24 ist Teil einer Nachstelleinrichtung 25, die dazu dient, im Betrieb der Kupplungsscheibe 1 an den Kupplungsbelaghälften 21, 22 auftretenden Verschleiß auszugleichen. Die Nachstelleinrichtung 25, die auch als Verschleißnachstelleinrichtung bezeichnet wird, umfasst zusätzlich zu der Gegenrampeneinrichtung 24 eine Verstellrampeneinrichtung 30. Die Verstellrampeneinrichtung 30 umfasst einen radial äußeren Verstellrampenring 31 und einen radial inneren Verstellrampenring 32. An den beiden Verstellrampenringen 31, 32 sind Verstellrampen ausgebildet, die an Gegenrampen anliegen, die an dem Gegenrampenring 24 ausgebildet sind. Die beiden Verstellrampenringe 31, 32 sind durch eine Zugfedereinrichtung 34 in Umfangsrichtung auf Zug gegeneinander vorgespannt. Die Steigungen der Verstellrampen und der Gegenrampen sind so gewählt und aufeinander abgestimmt, dass die Vorspannkraft der Zugfedereinrichtung 34, die vorzugsweise mehrere Zugfederelemente umfasst, die beiden Kupplungsbelaghälften 21, 22 in axialer Richtung auseinanderdrückt. In axialer Richtung zwischen den beiden Verstellrampenringen 31, 32 und dem Belagträgerblech 17 der ersten Kupplungsbelaghälfte 21 ist ein Belagfederblech 36 angeordnet, durch das die beiden Kupplungsbelaghälften 21, 22 in axialer Richtung gegeneinander vorgespannt sind.

Die Kupplungsbelaghälften 21, 22 weisen jeweils eine ringförmige Reibfläche auf, in der mehrere Ausnehmungen vorgesehen sind. Die Ausnehmungen haben die Gestalt von Kreisen, von denen ein Kreissegment abgeschnitten ist. In den Ausnehmungen ist jeweils ein Sensorreibelement 41, 42 aufgenommen, das die Gestalt eines Kreises aufweist, der mit einem Segment aus der zugehörigen Ausnehmung radial nach innen herausragt. Die Sensorreibelemente 41, 42 umfassen jeweils eine Metallscheibe 43, 45, auf die ein Sensorbelagpad 44, 46 aufgeklebt ist. Die aus den zugehörigen Ausnehmungen herausragenden Kreissegmente der Sensorreibelemente 41, 42 werden teilweise von einem radial äußeren Umfangsrand 51, 52 der Seitenteile 5, 6 umgriffen.

Durch die radial äußeren Umfangränder 51, 52 der Seitenteile 5, 6 werden die Sensorreibelemente 41, 42 in einem definierten axialen Abstand zueinander gehalten. Dabei liegen die radial äußeren Umfangsränder 51, 52, bezogen auf die Kupplungsscheibe 1, außen an den Sensorreibelementen 41, 42 an. Die Metallscheiben 43, 45 der Sensorreibelemente 41, 42 sind, bezogen auf die Kupplungsscheibe 1, innen angeordnet. Die Metallscheibe 43 des Sensorreibelements 41 liegt an dem Belagträgerblech 17 an. Die Metallscheibe 45 des Sensorreibelements 42 liegt an dem Gegenrampenring 24 an.

Die beiden Verstellrampenringe 31, 32 sind durch die Zugfedereinrichtung 34 so gegen den Gegenrampenring 24 vorgespannt, dass die beiden Kupplungsbelaghälften 21, 22 zusammen mit den Sensorreibelementen 41, 42 auseinandergedrückt werden. Durch die radial äußeren Umfangsränder 51, 52 der Seitenteile 5, 6 werden die Sensorreibelemente 41, 42 zusammen mit den Kupplungsbelaghälften 21, 22 in einem definierten axialen Abstand zueinander gehalten. Im Betrieb der Kupplungsscheibeneinrichtung 1 verschleißen sowohl die Kupplungsbelaghälften 21, 22 als auch die Sensorbelagpads 44, 46. Die Ausnehmungen für die Sensorreibelemente 41, 42 in den Kupplungsbelaghälften 21, 22 sind so gestaltet, dass die Sensorreibelemente 41, 42 im Betrieb der Kupplungsscheibeneinrichtung 1 hin- und herrutschen und sich dabei auch um ihre eigene Achse verdrehen. Dadurch wird gewährleistet, dass die Sensorbelagpads 44, 46 über ihre gesamte Berührungsfläche gleichmäßig verschleißen, und zwar auch in den Bereichen, die aus den Ausnehmungen in den Kupplungsbelaghälften 21, 22 herausragen.

Bei einer Verdrehung der Sensorreibelemente 41, 42 wird ein auftretender Verschleißbereich aus dem Bereich der zugehörigen Ausnehmung radial nach innen heraus transportiert. Dabei entsteht ein Spalt zwischen den Reibbelagpads 44, 46 und den radial äußeren Umfangsrändern 51, 52 der Seitenteile 5, 6. Da die axialen Abmessungen der Stufenbolzen 15, 16, welche die Sensorreibelemente 41, 42 in axialer Richtung zusammenhalten, konstant sind, werden die Kupplungsbelaghälften 21, 22 durch die vorgespannte Nachstelleinrichtung 25 auseinandergedrückt bis der verschleißbedingte Spalt wieder durch die Sensorreibelemente 41, 42 ausgefüllt ist und die Sensorreibelemente 41, 42 wieder an den radial äußeren Umfangsrändern 51, 52 der Seitenteile 5, 6 anliegen. So kann ein im Betrieb auftretender Verschleiß der Kupplungsbelaghälften 21, 22 kontinuierlich nachgestellt werden.

Gemäß einem wesentlichen Aspekt der Erfindung haben die beiden Verstellrampenringe 31,32 etwa die gleiche Massenträgheit. Zudem weisen die Rampen der Verstellrampenringe 31, 32 gegenläufige Steigungsrichtungen auf und sind miteinander durch drei Zahnräder planetengetriebeartig verbunden. In Figur 2 sieht man, dass an dem Gegenrampenring 24 ein Stufenbolzen 58 befestigt ist, auf dem eines der Zahnräder, das mit dem Bezugszeichen 59 versehen ist, drehbar angebracht ist.

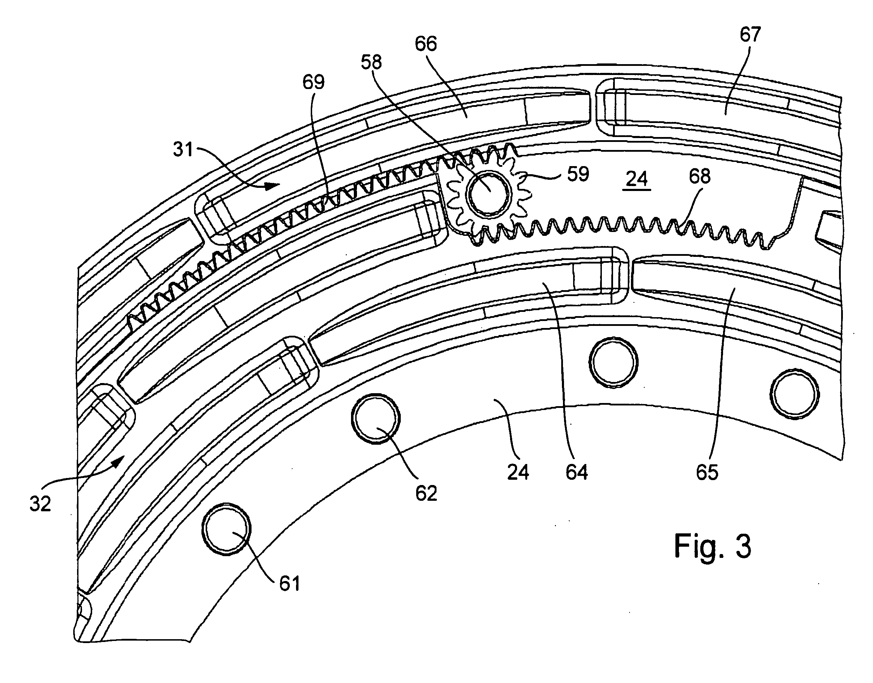

In Figur 3 sind der Gegenrampenring 24 und die darauf angeordneten Verstellrampenringe 31, 32 in der Draufsicht dargestellt. Mit 61 und 62 sind Stufenbolzen im Schnitt angedeutet, die sich in axialer Richtung durch den Gegenrampenring 24 hindurch erstrecken. Die Stufenbolzen 61, 62 haben die gleiche Funktion wie die Stufenbolzen 15, 16 in den Figuren 1 und 2. Die Verstellrampenringe 31, 32 sind teilweise durchsichtig dargestellt, um die an ihnen ausgebildeten Verstellrampen 64, 65 und 66, 67 sichtbar zu machen. Die an dem Verstellrampenring 32 ausgebildeten Verstellrampen 64, 65 weisen eine Steigung auf, die gegenläufig zu der Steigung der Verstellrampen 66, 67 ist, die an dem Verstellrampenring 31 ausgebildet sind. Die Verstellrampen 64 bis 67 der Verstellrampenringe 31, 32 liegen an komplementär ausgebildeten Gegenrampen des Gegenrampenrings 24 an.

In Figur 3 sieht man, dass das Zahnrad 59 eine Außenverzahnung aufweist, die in Verzahnungen 68, 69 eingreift. Die Verzahnung 68 ist radial innen an dem Verstellrampenring 31 ausgebildet. Die Verzahnung 69 ist radial außen an dem Verstellrampenring 32 ausgebildet. Die Verzahnungen 68, 69 erstrecken sich entlang von Kreisbögen, die koaxial zueinander angeordnet sind. Durch das Zahnrad 59, das mit den Verzahnungen 68, 69 der Verstellrampenringe 32, 31 kämmt und an dem Gegenrampenring 24 drehbar angebracht ist, wird zusammen mit den zwei weiteren (in Figur 3 nicht sichtbaren) Zahnrädern, die analog mit Verzahnungen der Verstellrampenringe 31, 32 zusammenwirken, eine Art Planetengetriebe geschaffen. Bei der Aufteilung der Massenträgheit der Verstellrampenringe 31, 32 ist die Übersetzung des Planetengetriebes zu berücksichtigen. Durch die planetengetriebeartige Kopplung der Verstellrampenringe 31, 32 mit dem Gegenrampenring 24 kann ein unerwünschter Einfluss von hohen Winkelbeschleunigungen auf die Nachstelleinrichtung 25 weitgehend minimiert werden.

Die Verzahnungen 68, 69 an den Verstellrampenringen 31, 32 sind vorzugsweise zusammen mit den Rampen 64 bis 67 tiefgezogen. Bei den Zahnrädern 59 handelt es sich vorzugsweise um gestanzte Blechteile. Es ist vorteilhaft, die Zugfederkraft der Zugfedereinrichtung 34 gering zu halten, wodurch die Vorspannung der Belagfederung ebenfalls gering gehalten werden kann. Gemäß einem wesentlichen Aspekt der Erfindung bleibt die Massenträgheit der Kupplungsscheibe 1 gegenüber herkömmlichen Kupplungsscheiben im Wesentlichen unverändert.

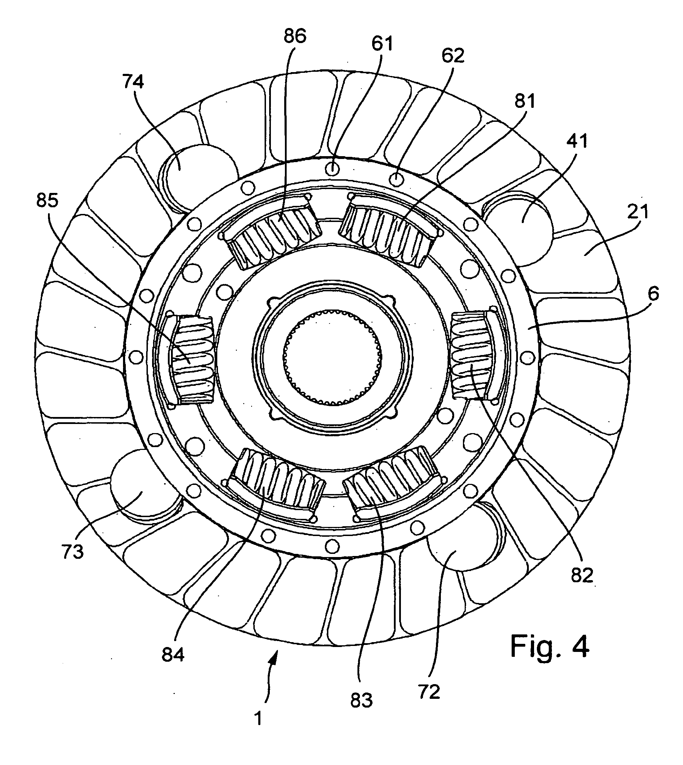

In Figur 4 sieht man, dass die Kupplungsbelaghälfte 21 nicht nur eine Ausnehmung mit einem Sensorreibelement 41, sondern drei weitere Ausnehmungen aufweist, in denen drei weitere Sensorreibelemente 72, 73 und 74 angeordnet sind. Analog sind in der Kupplungsbelaghälfte 22 (in Figur 4 nicht sichtbar) ebenfalls vier Ausnehmungen mit vier Sensorreibelementen vorgesehen. Die Sensorreibelemente sind jeweils paarweise in axialer Richtung gegenüberliegend angeordnet. Durch die vorzugsweise gleichmäßige Verteilung der Sensorreibelemente über dem Umfang der Kupplungsbelaghälften werden diese radial innen parallel zueinander gehalten. Gemäß einem weiteren Aspekt der Erfindung sind die Kupplungsbelaghälften 21, 22 in axialer Richtung an den Stufenbolzen 15, 16 geführt, wie man in den Figuren 1 und 2 sieht. Zu diesem Zweck weisen der Gegenrampenring 24 und das Belagträgerblech 17 sowie das Belagfederblech 36 jeweils eine Vielzahl von Durchgangslöchern auf, durch welche sich die Stufenbolzen 15, 16 in axialer Richtung hindurch erstrecken. Des Weiteren sieht man in Figur 4, dass die Federeinrichtung der Drehschwingungsdämpfungseinrichtung sechs Federelemente 81 bis 86 umfasst.

### Bezugszeichenliste

- 1.: Kupplungsscheibe
- 3.: Drehschwingungsdämpfungseinrichtung
- 4.: Nabe
- 5.: Seitenteil
- 6.: Seitenteil
- 8.: Federeinrichtung
- 10.: Zwischenteil
- 12.: Reibring
- 14.: Drehachse
- 15.: Stufenbolzen
- 16.: Stufenbolzen
- 17.: Belagträgerblech
- 21.: Kupplungsbelaghälfte
- 22.: Kupplungsbelaghälfte
- 24.: Gegenrampenring
- 25.: Nachstelleinrichtung
- 30.: Verstellrampeneinrichtung
- 31.: Verstellrampenring
- 32.: Verstellrampenring
- 34.: Zugfedereinrichtung
- 36.: Belagfederblech
- 41.: Sensorreibelement
- 42.: Sensorreibelement
- 43.: Metallscheibe
- 44.: Sensorbelagpad
- 45.: Metallscheibe
- 46.: Sensorbelagpad
- 51.: Umfangsrand
- 52.: Umfangsrand
- 58.: Stufenbolzen

- 59.: Zahnrad
- 61.: Stufen bolzen
- 62.: Stufenbolzen
- 64.: Rampe
- 65.: Rampe
- 66.: Rampe
- 67.: Rampe
- 68.: Verzahnung
- 69.: Verzahnung
- 72.: Sensorreibelement
- 73.: Sensorreibelement
- 74.: Sensorreibelement
- 81.: Federelement
- 82.: Federelement
- 83.: Federelement
- 84.: Federelement
- 85.: Federelement
- 86.: Federelement

## Patentansprüche

1. Kupplungsscheibeneinrichtung mit in axialer Richtung voneinander beabstandeten Reibbelagteilen (21,22), insbesondere Reibbelaghälften, die zwischen zwei Kupplungselementen einklemmbar sind, und mit einer Nachstelleinrichtung (25), die zwischen den Reibbelagteilen (21,22) wirksam ist und eine Verstellrampeneinrichtung (30) umfasst, die mit einer Gegenrampeneinrichtung (24) zusammenwirkt, **dadurch gekennzeichnet, dass** die Verstellrampeneinrichtung (30) planetengetriebeartig mit der Gegenrampeneinrichtung (24) gekoppelt ist, wobei die Verstellrampeneinrichtung (30) einen radial äußeren Verstellrampenring (31) und einen radial inneren Verstellrampenring (32) umfasst.

2. Kupplungsscheibeneinrichtung nach Anspruch 1, **dadurch gekennzeichnet, dass** die beiden Verstellrampenringe (31,32) etwa die gleiche Massenträgheit aufweisen.

3. Kupplungsscheibeneinrichtung nach Anspruch 1 oder 2, **dadurch gekennzeichnet, dass** die beiden Verstellrampenringe (31,32) Verstellrampen (66,67;64,65) mit gegenläufigen Steigungen aufweisen.

4. Kupplungsscheibeneinrichtung nach einem der Ansprüche 1 bis 3, **dadurch gekennzeichnet, dass** sich die beiden Verstellrampenringe (31,32) mit mindestens drei Zahnrädern (59) in Eingriff befinden.

5. Kupplungsscheibeneinrichtung nach Anspruch 4, **dadurch gekennzeichnet, dass** der radial äußere Verstellrampenring (31) radial innen Verzahnungsabschnitte (69) aufweist, in die jeweils eines der Zahnräder (59) eingreift.

6. Kupplungsscheibeneinrichtung nach Anspruch 4 oder 5, **dadurch gekennzeichnet, dass** der radial innere Verstellrampenring (32) radial außen Verzahnungsabschnitte (68) aufweist, in die jeweils eines der Zahnräder (59) eingreift.

7. Kupplungsscheibeneinrichtung nach einem der Ansprüche 4 bis 6, **dadurch gekennzeichnet, dass** die Zahnräder (59) drehbar an der Gegenrampeneinrichtung (24) angebracht sind.

8. Kupplungsscheibeneinrichtung nach einem der Ansprüche 1 bis 7, **dadurch gekennzeichnet, dass** die beiden Verstellrampenringe (31,32) durch eine in Umfangsrichtung wirksame Zugfedereinrichtung (34) miteinander gekoppelt sind.

9. Kupplungsscheibeneinrichtung nach Anspruch 1, mit einer Sensoreinrichtung, die mit der Nachstelleinrichtung (25) zusammenwirkt, **dadurch gekennzeichnet, dass** die Sensoreinrichtung mehrere Paare, insbesondere mindestens drei Paare Sensorreibelemente (41,42;72-74) umfasst, die über den Umfang der Reibbelagteile (21,22) verteilt sind und die Reibbelagteile (21,22) in axialer Richtung zusammenhalten.

10. Kupplungsscheibeneinrichtung nach Anspruch 9, **dadurch gekennzeichnet, dass** die Sensorreibelemente (41,42;72-74) in axialer Richtung teilweise zwischen zwei Seitenteilen (5,6) einer Drehschwingungsdämpfungseinrichtung (3) angeordnet sind.

11. Kupplungsscheibeneinrichtung nach Anspruch 9 oder 10, **dadurch gekennzeichnet, dass** die Sensorreibelemente (41,42) Sensorreibflächen umfassen, an denen die Kupplungselemente zur Anlage kommen, wenn die Kupplungselemente an Reibflächen der Reibbelagteile (21,22) zur Anlage kommen.

12. Kupplungsscheibeneinrichtung nach einem der Ansprüche 9 bis 11, **dadurch gekennzeichnet, dass** die Sensorreibelemente (41,42) rund oder teilweise gerundet ausgebildet und in jeweils einer Ausnehmung gehalten sind, die in dem zugehörigen Reibbelagteil (21,22) ausgespart ist.

13. Kupplungsscheibeneinrichtung nach Anspruch 12, **dadurch gekennzeichnet, dass** die Sensorreibelemente (41,42) in den zugehörigen Ausnehmungen drehbar so angeordnet und geführt sind, dass sie sich in den zugehörigen Ausnehmungen verdrehen, wenn die Kupplungselemente an den Sensorreibflächen der Sensorreibelemente zur Anlage kommen.

14. Kupplungsaggregat zur Drehmomentübertragung zwischen einem Motor und einem Getriebe, mit mindestens einer Kupplungseinrichtung, insbesondere einer Reibungskupplung, die eine Druckplatte umfasst, die drehfest, jedoch axial in Richtung einer zwischen der Druckplatte und einer Gegendruckplatte einklemmbaren Kupplungsscheibeneinrichtung (1) nach einem der vorhergehenden Ansprüche verlagerbar ist.

## Claims

1. Clutch disc device with friction-lining parts (21, 22), in particular friction-lining halves, which are spaced apart from one another in the axial direction and which can be clamped between two clutch elements, and with an adjustment device (25) which is active between the friction-lining parts (21, 22) and comprises an adjusting-ramp device (30) which cooperates with a counter-ramp device (24), **characterized in that** the adjusting-ramp device (30) is coupled to the counter-ramp device (24) in the manner of a planetary gear, the adjusting-ramp device (30) comprising a radially outer adjusting-ramp ring (31) and a radially inner adjusting-ramp ring (32).

2. Clutch disc device according to Claim 1, **characterized in that** the two adjusting-ramp rings (31, 32) have approximately the same mass inertia.

3. Clutch disc device according to Claim 1 or 2, **characterized in that** the two adjusting-ramp rings (31, 32) have adjusting ramps (66, 67; 64, 65) with contradirectional pitches.

4. Clutch disc device according to one of Claims 1 to 3, **characterized in that** the two adjusting-ramp rings (31, 32) are in engagement with at least three gearwheels (59).

5. Clutch disc device according to Claim 4, **characterized in that** the radially outer adjusting-ramp ring (31) has, radially on the inside, toothing portions (69), into which in each case one of the gearwheels (59) engages.

6. Clutch disc device according to Claim 4 or 5, **characterized in that** the radially inner adjusting-ramp ring (32) has, radially on the outside, toothing portions (68), into which in each case one of the gearwheels (59) engages.

7. Clutch disc device according to one of Claims 4 to 6, **characterized in that** the gearwheels (59) are attached rotatably to the counter-ramp device (24).

8. Clutch disc device according to one of Claims 1 to 7, **characterized in that** the two adjusting-ramp rings (31, 32) are coupled to one another by means of a tension-spring device (34) active in the circumferential direction.

9. Clutch disc device according to Claim 1, with a sensor device which cooperates with the adjustment device (25), **characterized in that** the sensor device comprises a plurality of pairs, in particular at least three pairs, of sensor friction elements (41, 42; 72-74) which are distributed over the circumference of the friction-lining parts (21, 22) and which hold the friction-lining parts (21, 22) together in the axial direction.

10. Clutch disc device according to Claim 9, **characterized in that** the sensor friction elements (41, 42; 72-74) are arranged in the axial direction partially between two side parts (5, 6) of a torsional vibration damping device (3).

11. Clutch disc device according to Claim 9 or 10, **characterized in that** the sensor friction elements (41, 42) comprise sensor friction surfaces, against which the clutch elements come to bear when the clutch elements come to bear against friction surfaces of the friction-lining parts (21, 22).

12. Clutch disc device according to one of Claims 9 to 11, **characterized in that** the sensor friction elements (41, 42) are of round or partially rounded form and are held in each case in a recess which is cutout in the associated friction-lining part (21, 22).

13. Clutch disc device according to Claim 12, **characterized in that** the sensor friction elements (41, 42) are arranged and guided rotatably in the associated recesses such that they rotate in the associated recesses when the clutch elements come to bear against the sensor friction surfaces of the sensor friction elements.

14. Clutch assembly for the transfer of torque between an engine and a transmission, with at least one clutch device, in particular friction clutch, which comprises a pressure plate which is displaceable fixedly in terms of rotation, but axially in the direction of a clutch disc device (1) according to one of the preceding claims which can be clamped between the pressure plate and a counterpressure plate.

## Revendications

1. Dispositif de disque d'embrayage comprenant des parties de garniture de friction (21, 22) espacées l'une de l'autre dans la direction axiale, en particulier des moitiés de garniture de friction, qui peuvent être serrées entre deux éléments d'embrayage, et comprenant un dispositif de réglage (25) qui agit entre les parties de garniture de friction (21, 22), et qui comprend un dispositif de rampe de réglage (30) qui coopère avec un dispositif de rampe conjuguée (24), **caractérisé en ce que** le dispositif de rampe de réglage (30) est accouplé du côté de l'engrenage planétaire au dispositif de rampe conjuguée (24), le dispositif de rampe de réglage (30) comprenant une bague de rampe de réglage radialement externe (31) et une bague de rampe de réglage radialement interne (32).

2. Dispositif de disque d'embrayage selon la revendication 1, **caractérisé en ce que** les deux bagues de rampe de réglage (31, 32) présentent approximativement la même inertie de masse.

3. Dispositif de disque d'embrayage selon la revendication 1 ou 2, **caractérisé en ce que** les deux bagues de rampe de réglage (31, 32) présentent des rampes de réglage (66, 67 ; 64, 65) avec des pentes opposées.

4. Dispositif de disque d'embrayage selon l'une quelconque des revendications 1 à 3, **caractérisé en ce que** les deux bagues de rampe de réglage (31, 32) sont en prise avec au moins trois roues dentées (59).

5. Dispositif de disque d'embrayage selon la revendication 4, **caractérisé en ce que** la bague de rampe de réglage radialement externe (31) présente des portions de denture radialement internes (69) dans lesquelles s'engage l'une des roues dentées (59).

6. Dispositif de disque d'embrayage selon la revendication 4 ou 5, **caractérisé en ce que** la bague de rampe de réglage radialement interne (32) présente des portions de denture radialement externes (68) dans lesquelles s'engage à chaque fois l'une des roues dentées (59).

7. Dispositif de disque d'embrayage selon l'une quelconque des revendications 4 à 6, **caractérisé en ce que** les roues dentées (59) sont montées de manière rotative sur le dispositif de rampe conjuguée (24).

8. Dispositif de disque d'embrayage selon l'une quelconque des revendications 1 à 7, **caractérisé en ce que** les deux bagues de rampe de réglage (31, 32) sont accouplées l'une à l'autre par un dispositif de ressort de traction (34) agissant dans la direction périphérique.

9. Dispositif de disque d'embrayage selon la revendication 1, comprenant un dispositif de capteur qui coopère avec le dispositif de réglage (25), **caractérisé en ce que** le dispositif de capteur comprend plusieurs paires, notamment au moins trois paires d'éléments de friction de capteur (41, 42 ; 72-74) qui sont répartis sur la périphérie des parties de garniture de friction (21, 22) et qui retiennent ensemble les parties de garniture de friction (21, 22) dans la direction axiale.

10. Dispositif de disque d'embrayage selon la revendication 9, **caractérisé en ce que** les éléments de friction de capteur (41, 42 ; 72-74) sont disposés dans la direction axiale en partie entre deux parties latérales (5, 6) d'un dispositif d'amortissement d'oscillations de torsion (3).

11. Dispositif de disque d'embrayage selon la revendication 9 ou 10, **caractérisé en ce que** les éléments de friction de capteur (41, 42) comprennent des surfaces de friction de capteur sur lesquelles viennent en appui les éléments d'embrayage, lorsque les éléments d'embrayage viennent en appui contre des surfaces de friction des parties de garniture de friction (21, 22).

12. Dispositif de disque d'embrayage selon l'une quelconque des revendications 9 à 11, **caractérisé en ce que** les éléments de friction de capteur (41, 42) sont réalisés sous forme ronde ou partiellement arrondie et sont maintenus à chaque fois dans un évidement qui est pratiqué dans la partie de garniture de friction associée (21, 22).

13. Dispositif de disque d'embrayage selon la revendication 12, **caractérisé en ce que** les éléments de friction de capteur (41, 42) sont disposés et guidés de manière rotative dans les évidements associés de telle sorte qu'ils tournent dans les évidements associés lorsque les éléments d'embrayage viennent en appui contre les surfaces de friction de capteur des éléments de friction de capteur.

14. Ensemble d'embrayage pour le transfert de couple entre un moteur et une transmission, comprenant au moins un dispositif d'embrayage, en particulier un embrayage à friction, qui comprend une plaque de pression qui peut être déplacée de manière solidaire en rotation mais toutefois axialement dans la direction d'un dispositif de disque d'embrayage (1) selon l'une quelconque des revendications précédentes pouvant être serré entre la plaque de pression et une plaque de pression conjuguée.
